# EUROPÄISCHE PATENTSCHRIFT

(11) **EP 1 019 232 B1**
(45) Veröffentlichungstag und Bekanntmachung des Hinweises auf die Patenterteilung: **15.01.2003**
(21) Anmeldenummer: 98952623.1
(22) Anmeldetag: 22.09.1998
(51) Int. Cl.: B29C 43/36, B30B 15/06

(54) **DIFFERENZIERTER PRESSPROZESS**
DIFFERENTIATED PRESSING PROCESS
PROCEDE DE PRESSAGE DIFFERENCIE

(30) Priorität: 02.10.1997 AT 166997
(43) Veröffentlichungstag der Anmeldung: 19.07.2000
(73) Patentinhaber: Borealis GmbH, 2323 Schwechat-Mannswörth (AT)
(72) Erfinder: HERBST, Harald, A-8163 Fladnitz / T60 (AT)
(74) Vertreter: VA TECH Patente GmbH & Co
(86) Internationale Anmeldenummer: EP9806034
(87) Internationale Veröffentlichungsnummer: WO99017914

(56) Entgegenhaltungen:
- EP-A- 0 510 414
- WO-A-89/05718
- AT-B- 359 402
- AT-B- 366 268
- FR-A- 2 096 515
- FR-A- 2 529 505
- FR-A- 2 594 745
- GB-A- 2 241 663
- US-A- 2 796 215
- US-A- 4 695 243
- US-A- 5 204 127

## Beschreibung

Die Erfindung betrifft einen diskontinuierlichen Umformprozeß (Preßprozeß) für Kunststoffe nach dem Arbeitsprinzip der Volumsverdrängung in der Kavität eines Werkzeuges mittels eines differenzierten Preßprozesses sowie Vorrichtungen zur Durchführung des Verfahrens. Der erfindungsgemäße Preßprozeß gestattet es, die bei Preßprozessen nach dem Stand der Technik jeweils vor allem am Ende des Preßprozesses notwendigen hohen auftretenden Preßkräfte und damit Preßleistungen beträchtlich zu reduzieren und somit den Bauaufwand für die Pressen entsprechend zu vermindern.

Sowohl bei der Darstellung des Standes der Technik, als auch der Erfindung werden einige Begriffe verwendet, die wie folgt definiert werden:

Der verwendete Begriff "Kavität" ist definiert als der in seiner Oberfläche und seinem Volumen während des Formgebungsprozesses veränderbare Raum, begrenzt durch Werkzeugoberflächen sowie durch Flächen, entlang denen das Werkzeug geschlossen wird. Die vom Werkzeug gebildete Kavität ist am Ende des Formgebungsprozesses mit der Geometrie des herzustellenden Produktes (Bauteil) ident. Die Kavität wird üblicherweise von Oberflächen zweier Werkzeughälften begrenzt. Zusatzkavitäten (z.B. Fließkanäle), welche für den Formgebungsprozeß wichtig sind, aber nicht zur Bauteilgeometrie gehören, sind im Begriff "Kavität" nicht mit enthalten.

Unter "produktbeaufschlagter Kavität" versteht man den Teil bzw. das Teilvolumen der Kavität, welches zum jeweiligen Zeitpunkt des Formgebungsprozesses mit umzuformendem Material gefüllt ist.

Mit dem Begriff "produktbeaufschlagte Oberfläche" wird jene Oberfläche der Kavität bezeichnet, welche zum jeweiligen Zeitpunkt des Formgebungsprozesses in Kontakt mit dem umzuformenden Material steht.

Das Arbeitsprinzip eines Umformprozesses (bzw. Formgebungsprozesses) durch Volumsverdrängung besteht darin, daß auf eine verformbare Masse Druck ausgeübt wird, um diese in eine bestimmte Form zu zwingen. Unter dem Begriff der "Energieeinbringung in das umzuformende Material" versteht man das Einbringen von mechanischer Energie in das umzuformende Material in externen Aggregaten oder durch entsprechende Bewegung der produktbeaufschlagten Kavitätsoberflächen.

Das diskontinuierliche Umformen von Kunststoffen in einer Kavität startet mit der Reduktion der Kavität und endet zum Zeitpunkt, wenn die Kavität mit dem umzuformenden Material vollständig gefüllt ist (Füllphase). Die Nachdruckphase des Umformprozesses zur Kompensation der Schwindung ist im Begriff "diskontinuierliches Umformen von Kunststoffen durch Volumsverdrängung in einer Kavität" nicht mit enthalten.

Prozesse nach dem Stand der Technik, auf die die vorliegende Erfindung angewendet werden kann, sind:

Unter Preßprozessen gemäß Stand der Technik bezeichnet man jene formgebenden Verarbeitungsverfahren, bei denen das Arbeitsprinzip der Volumsverdrängung direkt in der Kavität abläuft. Beim Schließen der in sich starren Werkzeughälften während des Formgebungsprozesses wird der Abstand der beiden Werkzeughälften reduziert, wodurch sich das Volumen der Kavität verringert. Mit der Reduktion der Werkzeugöffnung wird Umformenergie über die produktbeaufschlagten Oberflächen der Kavität in das umzuformende Material eingebracht.

Bei Preßverfahren nach Stand der Technik wird die gesamte Materialmasse direkt vor Beginn des Preßprozesses in die geöffnete Kavität eingebracht. Der Preßprozeß selbst beginnt mit der Bewegung einer oder beider Werkzeughälften, wobei die für den Formgebungsprozeß entscheidende Energieeinbringung auf das umzuformende Material über die produktbeaufschlagte Kavitätsoberfläche erfolgt. Mit zunehmender Verringerung der Werkzeugöffnung während des Formgebungsprozesses vergrößert sich die produktbeaufschlagte Kavitätsoberfläche. Der Preßprozeß gilt als beendet, wenn die Bewegungen der Werkzeughälften zum Stillstand gekommen sind, und damit keine Umformenergie mehr eingebracht wird. Während der Schließbewegung der Werkzeughälften verharren an sich bewegliche Werkzeugteile der Werkzeughälften, welche der Oberfläche der Kavität angehören, wie etwa Auswerfer oder Schieber, in ihrer, der Kontur entsprechenden Grundstellung, sodaß die Oberflächenkonturen der Kavität beider Werkzeughälften während des gesamten Preßprozesses als starr angesehen werden können.

Das Arbeitsprinzip der Volumsverdrängung bedingt, daß es während des Formgebungsprozesses zu "Materialflüssen" kommt. Die Größenordnung der Materialbewegung oder auch Materialbeanspruchung während des Formgebungsprozesses in Preßprozessen erlaubt ebenfalls eine Differenzierung der Preßprozesse in ein Formpreßverfahren und in ein Fließpreßverfahren.

Unter dem Formpreßverfahren ist das Umformen zum Preßteil zu verstehen, bei dem die in die geöffnete Kavität eingebrachte Preßmasse in ihrer Gestalt weitestgehend der projizierten Fläche der Bauteilkontur entspricht, wodurch keine großen Fließwege des zu verpressenden Materials während des Formpreßprozesses notwendig sind. Im Formpreßprozeß werden die durch die Schließbewegung der Werkzeughälften eingebrachten Preßenergien vorwiegend in lokal beschränkten plastischen Material-Umformungen und in Kompressionsarbeit dissipiert.

Beim Fließpreßverfahren nach Stand der Technik wird vor Beginn des Preßprozesses die gesamte Preßmasse in die Kavität eingebracht, wobei die Masse des eingebrachten Preßgutes der Masse des Bauteiles entspricht. Durch den Preßprozeß wird das Fließvermögen des zu verpessenden Preßgutes bei den gewählten Verarbeitungsparametern (Druck, Temperaturen, Zeit) genützt, um die Kavität zu füllen. Da beim Fließpreßprozeß die in die geöffnete Kavität eingebrachte Preßmasse in ihrer Gestalt wesentlich kleiner als die projizierten Flächen der Bauteilkontur ist, erfolgt die Umformung des in das Werkzeug eingebrachten Materials zum Bauteil durch Zurücklegung großer Fließwege.

Bei einer Variante des Preßverfahrens, dem Spritzpreßverfahren, umfaßt ein Teil der Spritzzylinderoberfläche einen Teil einer Werkzeughälfte. Beim Spritzpreßverfahren wird das der vollständig geschlossenen Kavität entsprechende Materialvolumen direkt bei geöffneten Werkzeughälften in die durch den Spritzpreßzylinder zusätzlich gebildete Kavität eingelegt. Sodann werden die Werkzeughälften ohne Einbringung von Umformenergie auf das Sollmaß geschlossen. Die entscheidende Energieeinbringung in das umzuformende Material. erfolgt ausschließlich über die produktbeaufschlagte Oberfläche des Spritzpreßzylinders, welcher sich als in sich starrer Körper bewegt. Der Formgebungsprozeß endet mit der Bewegung des Spritzpreßzylinders zu dem Zeitpunkt, an dem die Geometrie der gesamten Kavitätsoberfläche mit der gewünschten Bauteilgeometrie ident ist.

Beim Spritzprägeverfahren, einem Sonderverfahren des Spritzpreßverfahrens, wird vorerst über Fließkanäle von außen das der Bauteilmasse entsprechende Preßgut in ein noch nicht gänzlich geschlossenes Werkzeug eingebracht. Dies erfolgt durch Einbringung von Umformenergie in das umzuformende Material in externen Aggregaten, wie zum Beispiel durch Spritzgießmaschinen (Spritzprozeß). Die weitere Umformung des in die Kavität eingebrachten Materials bis zur endgültigen Bauteilgeometrie erfolgt nach Stand der Technik mit der Schließbewegung einer oder beider Werkzeughälften (Prägevorgang). Die im Prägevorgang entscheidende Energieeinbringung auf das eingebrachte Material erfolgt ausschließlich durch die Schließbewegung der starren Werkzeughälften. Während der Schließbewegung der Werkzeughälften verharren an sich bewegliche Wekrzeugteile der Werkzeughälften, welche der Oberflächenkontur der Kavität angehören, in ihrer der Kontur entsprechenden Grundstellung. Der Schließvorgang der Kavitäten während des Prägevorganges ist ein Fließpreßprozeß.

Große Schwierigkeit bereitet bei praktisch allen obengenannten Verfahren eine optimale rheologische Auslegung des Umformprozesses. Unter einer optimalen rheologischen Auslegung des Umformprozesses versteht man die Verwirklichung von optimalen Fließfrontverläufen, Fließweglängen und Druckverhältnissen während der Füllphase. Oft sind auch definierte Orientierungen vor allem bei faserverstärkten Werkstoffen erwünscht, welche aber mit den Preßprozessen nach Stand der Technik kaum erreichbar sind. Aus Manipulationsgründen können nur wenige Einleger, erwünscht ist meist nur einer, in die geöffnete Werkzeugkavität eingelegt werden und dies keineswegs immer an die für den Fließpreßvorgang optimalen Stellen. Aufgrund der Preßgutherstellung ist man meist an vorgegebene Einlagegeometrien gebunden, was eine Optimierung der Einlagesituation weiters erschwert.

In einem Preßprozeß ist die vollständige Ausfüllung der Kavität mit zu verpressendem Material bei noch zulässigen Verarbeitungsparametern und bei festgesetzten Preßkräften und mechanischer oder hydraulischer Pressenleistungen der vorhandenen Maschinen oftmals von vorrangiger Bedeutung. Die benötigten Preßkräfte zum Schließen der Werkzeughälften werden gegen Ende des Fließpreßprozesses extrem hoch, sodaß sehr hohe Preßenergien und vorallem Preßleistungen für vollständige Werkzeugfüllungen vonnöten sind. Daher sind Pressen, welche für den Fließpreßprozeß zum Einsatz kommen, auf deren Preßleistung zu dimensionieren, was unter anderem dadurch erreicht wird, daß die hohe kinetische Energie der bewegten Werkzeughälfte zur Steigerung der maximalen Preßleistung verwendet wird, wodurch aber wiederum ein erheblicher Aufwand zur Steuerung und Regelung dieser Energie notwendig wird. Zudem besteht beim Fließpreßprozeß die große Tendenz einer drohenden Werkzeugkippung während des Schließens der Werkzeughälften, welche nur durch erheblichen technischen Aufwand unterdrückt werden kann.

Der diskontinuierliche Preßprozeß nach Stand der Technik verursacht eine enorme Vergeudung von Preßenergien und Preßleistungen. Dies spiegelt sich in erheblichem technischen Aufwand, in hohen Investitionskosten für entsprechend große, exakt arbeitende Pressen und in hohen Enegiekosten eines Preßprozesses wider. Zudem ist der Formgebungsprozeß bei Fließpreßprozessen nach heutigem Stand der Technik in der Preßkontrolle in hohem Maße indifferent.

In der FR 2 529 505 werden bewegliche Teile (Stifte) der Werkzeugform so positioniert, dass anschließend ein Ausstanzen von Ausnehmungen durch Weiterbewegen der Stifte durch das verformte Bauteil erfolgt, ohne das Bauteil zum Stanzen aus der Werkzeugform nehmen zu müssen. Diese Stifte sind miteinander über eine starre Platte verbundnen, sodass diese Werkzeugteile nur gemeinsam, simultan bewegt werden können und dabei gleiche Wege zurücklegen und gleiche Bewegungen ausführen müssen.

Gemäß der GB 2 241 663 wird ein spezielles Formteil dadurch hergestellt, dass in der Füllphase der Werkzeugform offene Kavitäten geschaffen werden, anschließend das Werkzeug gefüllt wird und in der Nachdruckphase die beweglichen Teile dazu genutzt werden, eine bestimmte definierte Kontur des Bauteils zu schaffen.

Aufgabe der vorliegenden Erfindung war es, die bei der Umformung im Preßprozeß von Kunststoffen benötigten Preßkräfte, Preßenergien und Preßleistungen zu reduzieren, wodurch beträchtliche Einsparungen an Energie und apparativem Aufwand ermöglicht werden. Dies wird gemäß vorliegender Erfindung durch die zeitliche und örtliche Differenzierung des Preßprozesses in mehrere Teilpreßprozesse erreicht.

Gegenstand der vorliegenden Erfindung ist demnach ein Verfahren zum diskontinuierlichen Umformen von Kunststoffen durch Volumsverdrängung in einer Kavität, bei dem die Einbringung der Umformenergie in das umzuformende Material durch mindestens zwei bewegte Teile der Kavitätsoberfläche erfolgt, wobei mindestens eine Werkzeughälfte einen oder mehrere relativ zu ihr bewegte Teile enthält, zumindest ein Teil der Umformenergie durch die Relativbewegung dieser Teile eingebracht wird und die Einbringung der Umformenergie über den gesamten Umformprozeß gesehen zeitlich und örtlich differenziert gesteuert erfolgt, das dadurch gekennzeichnet ist, daß an der Einbringung der Umformenergie über den gesamten Umformprozeß gesehen nur ein Teil der gesamten nicht parallel zur Bewegungsrichtung liegenden Kavitätsoberfläche mindestens einer Werkzeughälfte beteiligt ist.
Die Bewegungen der Kavitätsoberflächen werden bevorzugt so gesteuert, daß ein Stillstand von Fließfronten vermieden wird bzw. gezielte rheologische Strömungen und Druckverhältnisse während der Formgebung verwirklicht werden, was positive Konsequenzen in den erreichbaren Bauteilqualitäten, den möglichen Bauteildesigns und der gesamten Prozeßstabilität eines Fließpreßprozesses zur Folge hat.

Die genannten. Ausführungsformen beziehen sich ausschließlich auf die Arbeitsweise der Volumsverdrängung innerhalb der Kavität, unabhängig davon ob sich vor Beginn des Umformprozesses bereits das gesamte dem Bauteil entsprechende umzuformende Material in der geöffneten Werkzeugkavität befindet, oder aber, daß die Arbeitsweise der Volumsverdrängung innerhalb der Kavität simultan mit einer externen Einbringung Von umzuformenden Material in der Kavität erfolgt. Demnach kann sich das gesamte umzuformende Material bereits zu Beginn des Umformprozesses in der Kavität befinden. Es ist jedoch auch möglich, daß während des Umformprozesses umzuformendes Material von außen in die Kavität gebracht wird.

Die genannten Ausführungsformen beziehen sich sowohl auf Umformprozesse, bei denen das in die Kavität eingebrachte umzuformende Material große Materialbewegungen in. Form von Fließwegen zurücklegen muß, als auch auf Prozesse, bei denen schon geringe Materialbewegungen in Form von lokal plastischem Fließen bzw. lokal plastischen Verformungen ausreichen, um die Geometrie der auf das Sollmaß geschlossenen Kavität exakt auszufüllen, womit die Formgebung zum gewünschten Bauteil garantiert ist.

Eine weitere bevorzugte Ausführungsform der vorliegenden Erfindung besteht darin, daß in der Kavität befindliches, umzuformendes Material zunächst durch die Bewegung einer Werkzeughälfte teilweise in ein Reservoir gefördert wird, das durch Zurückweichen eines bewegten Teils dieser Kavitätsoberfläche in eine negative Relativposition gebildet wird, und anschließend durch positive Relativbewegung dieses bewegten Teils der Kavitätsoberfläche aus dem Reservoir in andere Bereiche der Kavität gefördert wird. Dabei wird während der Schließbewegung des Werkzeuges umzuformendes Material zunächst in das Reservoir gefördert, das wie oben erwähnt, dadurch gebildet wird, daß ein Teil der Kavitätsoberfläche zurückweicht, d. h. eine negative Relativbewegung ausführt und dadurch in eine negative Relativposition gelangt und anschließend sich wieder in Richtung der Kavität bewegt, d.h. eine positive Relativbewegung ausführt. Durch diese positive Relativbewegung wird das Material aus dem Reservoir in andere Bereiche der Kavität gefördert. Durch entsprechende Positionierung und Gestaltung eines oder mehrerer derartiger Reservoirs ist es möglich, die bei Preßprozessen nach dem Stand der Technik erforderlichen hohen Preßkräfte gegen Ende des Preßvorganges gänzlich zu vermeiden.

Die positive Relativbewegung des bewegten Teils der Kavitätsoberfläche zur Entleerung des Reservoirs wird vorzugsweise erst dann begonnen, wenn alle übrigen Werkzeugoberflächen zu diesem Zeitpunkt ihre Endstellung erreicht haben und keine weiteren Bewegungen ausführen.

Die zur Umformung im Preßprozeß erforderlichen Preßenergien, Preßleistungen und maximal erlaubten Schließkräfte können mit der vorliegenden Erfindung individuell optimal an vorhandene Maschinengrößen angepaßt werden, sodaß auch mechanische Schließ- und Verriegelungssysteme zum Einsatz kommen können, wodurch verschiedenste Größen von Bauteilen kostengünstigst hergestellt werden können.

Die vorliegende Erfindung erlaubt es zudem, den technischen Aufwand für Steuerungs- und Regelungseinrichtungen, welche die Kinetik der auftretenden Energien erfordert und zur Unterdrückung der großen Tendenz einer drohenden Werkzeugkippung während des Preßprozesses notwendig sind, auf ein Minimum zu reduzieren, was letztendlich die Kosten einer der Erfindung entsprechenden Preßeinrichtung drastisch reduzieren wird.

Weitere Gegenstände der Erfindung sind eine Vorrichtung zum diskontinuierlichen Pressen von Kunststoffen in einer Kavität bestehend aus zwei Werkzeughälften, sowie eine Vorrichtung zum Spritzprägen von Kunststoffen in einer Kavität bestehend aus zwei Werkzeughälften, bei denen mindestens zwei Teile der Kavitätsoberfläche derart beweglich gestaltet sind, wobei mindestens eine Werkzeughälfte einen oder mehrere relativ zu ihr bewegte Teile enthält, daß durch die Relativbewegung dieser Teile zumindest ein Teil der Umformenergie in den Kunststoff eingebracht wird. Die beweglichen Teile der Kavitätsoberflächen sind dabei bevorzugt Zusatzpressen. Bevorzugte Zusatzpressen sind beispielsweise mechanische oder hydraulische Pressen, bzw. Auswerfer oder Schieber.

Ein Werkzeug, welches nach dem Prinzip des diskontinuierlichen differenzierten Fließpreßverfahrens arbeitet, besteht üblicherweise aus zwei Werkzeughälften. Die stempelseitige Werkzeughälfte des Werkzeuges ist bevorzugt entweder mit einem Hydraulikkolben oder einem mechanischen Verriegelungssystem verbunden und führt die Schließ- bzw. die Öffnungsbewegung des Pressenwerkzeuges aus. Die matrizenseitige Wekzeughälfte ist dabei auf der Presse fix montiert.

Eine oder beide Werkzeughälften besitzen einen oder mehrere der Werkzeugkontur angehörende bewegliche Teile, welche gegenüber ihren Werkzeughälften Relativbewegungen ausführen können, wobei es dahingestellt bleibt, welcher Teil einer Werkzeughälfte die Bewegung ausführt. Alle beweglichen Teile, welche der Werkzeugkontur angehören, werden, wenn sie während des Umformprozesses relative Bewegungen gegenüber ihren angehörenden Werkzeughälften durchführen, und zudem mit ihrer Bewegung Umformenergie in das Preßgut einbringen, unabhängig von der Größe der beschreibenden Kontur, als Zusatzpressen bezeichnet.

Die positive Relativposition einer Zusatzpresse gegenüber weiteren Zusatzpressen ihrer Werkzeughälfte kann bereits zu Beginn des Preßvorganges vorliegen, oder aber durch Relativbewegungen während des differenzierten Fließpreßprozesses erreicht werden. Die positive Relativposition zwischen einer Zusatzpresse und ihrer Werkzeughälfte wird während der Kavitätsfüllung im differenzierten Fließpreßprozesses dahingehend benutzt, daß zunächst im Konturbereich der Zusatzpresse eine geringere Kavitätswanddicke simuliert wird, was der Ausbildung gezielter Strömungsvorgänge am Beginn oder während des differenzierten Fließpreßverlaufes von Nutzen ist.

Die negative Relativposition einer Zusatzpresse gegenüber weiteren Zusatzpressen ihrer Werkzeughälfte kann bereits zu Beginn des Preßvorganges vorliegen, oder aber durch Relativbewegungen während des differenzierten Fließpreßprozesses erreicht werden. Der Zweck einer negativen Relativposition zwischen einer Zusatzpresse und ihrer Werkzeughälfte während der Formfüllung im differenzierten Fließpreßprozeß besteht darin, während der Füllphase zusätzliches Volumen in der Werkzeugkavität für temporäre Materialreservoirs zu schaffen, da im Konturbereich der Zusatzpresse eine größere Kavitätswanddicke simuliert wird.

Zusatzkavitäten eines entsprechenden Werkzeuges, welche nicht Teil der Werkzeugkavität sind, aber mit dieser in Verbindung stehen, und über welche während des Formfüllvorganges weder Preßmasse noch Energie in die Preßmasse der produktbeaufschlagten Werkzeugkavität eingebracht wird, können zum Ausgleich von eingelegten Preßmasseschwankungen dienen.

Die Hauptaufgabe einer Zusatzpresse liegt darin, während der Füllphase des differenzierten Fließpreßvorganges, die Kavitätskontur nicht starr beizubehalten, sondern durch die möglichen Bewegungen der Zusatzpressen zusätzliche gezielte Volumskavitäten in der Werkzeugkavität zu bilden, welche als temporäre Materialreservoirs dienen. Während der positiven Relativbewegung einer Zusatzpresse wird Preßgut verpreßt, wobei das verdrängte Preßgut zum einen der Ausformung der entsprechenden Werkzeugkavität dient, und zum anderen gegebenenfalls zum Füllen von einem oder mehreren weiteren Materialreservoirs, die durch die negativen Relativpositionen der jeweiligen Zusatzpressen gebildet werden. Die Schließbewegung einer Zusatzpresse endet an der der gewünschten Bauteildicke oder knapp darüber (Schwindung) entsprechenden Position. Die weiteren Teilkavitätsfüllungen erfolgen analog durch die positiven Relativbewegungen der einzelnen Zusatzpressen, wobei die einzelnen Bewegungen der Zusatzpressen zeitlich simultan, überlappend oder auch sequentiell erfolgen können. Die gesamte Formgebung des Bauteiles im differenzierten Fließpreßprozeß ist beendet, wenn jede beliebige Stelle der Bauteiloberfläche mit der Oberflächenkontur des Werkzeuges übereinstimmt, und jeder Teilpreßvorgang beendet ist, was bei einer exakten Massendosierung und Einbringung der zu verpressenden fließfähigen Masse in die geöffnete Werkzeugkavität am Beginn des differenzierten Fließpreßvorganges der Fall ist. Zu diesem Zeitpunkt ist die gesamte Kavitätsoberfläche produktaufschlagt.

Die benötigte Kraftaufbringung für die Bewegungen und zur Wahrung des statischen Gleichgewichts der einzelnen Zusatzpressen während des differenzierten Fließpreßvorganges kann sowohl mechanisch als auch hydraulisch erfolgen. Die mechanisch durchgeführten Bewegungen der Zusatzpressen erfolgen über entsprechende Hebel (Kniehebel) oder Federelemente. So ist es auch durchaus vorstellbar, daß entsprechende Hubfunktionen von im Werkzeug integrierten Auswerfern oder Schiebern die Funktion der Zusatzpressen übernehmen. Die benötigte Kraftaufbringung der einzelnen Zusatzpressen kann aber auch hydraulisch erfolgen.

Die Steuerung bzw. die Regelung der einzelnen Bewegungen der Zusatzpressen kann sowohl Stempelweg- als Preßzeit-abhängig erfolgen. Die Steuerung bzw. die Regelung der Bewegungen der Zusatzpressen kann aber auch auf Basis von gemessenen mechanischen oder hydraulischen Schließkräften oder auch auf Basis von in der Werkzeugkavität an beliebiger Stelle gemessenen Forminnendrücken erfolgen.

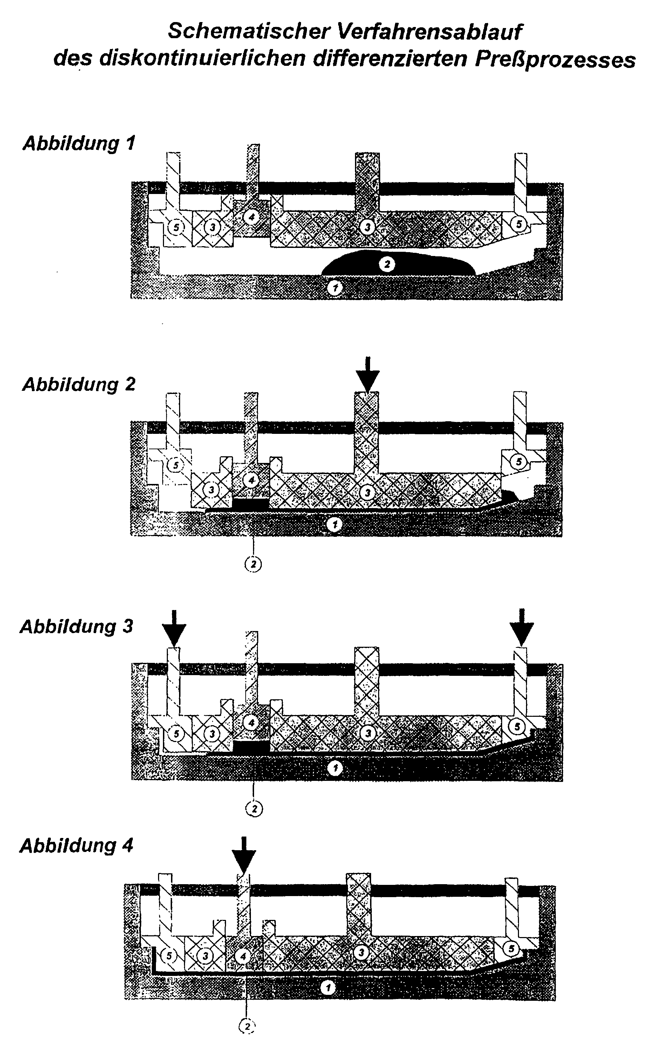

In den Abbildungen 1 bis 4 ist eine bevorzugte Form der zur Durchführung des Verfahrens verwendeten Vorrichtung, das heißt, des Werkzeuges, in 4 typischen Positionen entsprechend dem Verfahrensablauf des diskontinuierlichen differenzierten Fließpreßverfahrens dargestellt. Die am Beginn des differenzierten Preßprozesses in die Kavität eingebrachte Preßgutmasse entspricht der Bauteilmasse, sodaß während des differenzierten Preßprozesses in die Kavität keine zusätzliche Preßmasse eingebracht wird. Da am Beginn des Preßprozesses die produktbeaufschlagte Oberfläche der Kavität wesentlich kleiner als die gesamte Oberfläche der Kavität am Ende des Umformprozesses ist, erfolgt die Umformung zum Großteil durch das Fließvermögen der Preßmasse, wobei relativ große Fließwege auftreten.

Abbildung 1 zeigt die für den differenzierten Fließpreßprozeß benötigten werkzeugtechnischen Komponenten und deren Ausgangsstellung eines differenzierten Fließpreßprozesses. Die matrizenseitige Werkzeughälfte (1) ist in sich starr ausgeführt und fix montiert, wobei deren Werkzeugoberflächenkonturen mit der entsprechenden Bauteilgeometrie ident ist. Die stempelseitige Werkzeughälfte besteht aus den bewegliche Kavitätsoberflächen bildenden Werkzeugteilen (3), (4) und (5). Das in die geöffnete Werkzeugkavität eingebrachte zu verpressende Preßgut, dessen Masse der gewünschten Masse des Bauteiles entspricht, ist mit (2) bezeichnet. Das eingebrachte Preßgut liegt unter den gewählten Prozeßparametern in fließfähiger Form vor.

Die benötigte Kraftaufbringung für die Bewegungen und zur Wahrung der benötigten Schließkräfte der einzelnen bewegten Werkzeugteile kann in der genannten Ausführungsform sowohl mechanisch als auch hydraulisch erfolgen. Die einzelnen Bewegungen der Werkzeugteile (3), (4) und (5) können sowohl zeitlich simultan, überlappend oder auch sequentiell gesteuert erfolgen.

Abbildung 2 zeigt schematisch den Beginn des diskontinuierlichen differenzierten Preßprozesses. Durch die Schließbewegung des Werkzeugteiles (3) wird Umformenergie in das umzuformende Preßgut eingebracht, wobei es zu einer Umformung des in die Presse eingelegten Preßgutes kommt. Die Schließbewegung des Werkzeugteiles (3) endet in diesem Fall an der der gewünschten Bauteildicke entsprechenden Stellung und verharrt während der restlichen Formgebung im differenzierten Preßprozeß in dieser Stellung. Der in den Werkzeugteil (3) eingebaute bewegliche Werkzeugteil (4) führt in dieser Phase des differenzierten Preßprozesses dieselbe Schließbewegung wie der bewegte Werkzeugteil (3) aus. Durch die negative Relativposition des Werkzeugteiles (4) zum Werkzeugteil (3) am Beginn des differenzierten Preßprozesses ist es möglich, im entsprechenden Kavitätsbereich des Werkzeugteiles (4) ein temporäres Materialreservoir anzulegen.

Der bewegliche Werkzeugteil (5) führt in der ersten Phase des differenzierten Preßprozesses keine Bewegung aus.

Die nächste Prozeßphase des diskontinuierlichen differenzierten Preßprozesses wird in Abbildung 3 gezeigt. Die Schließbewegung des beweglichen Werkzeugteiles (5) erzeugt einen Formschluß zwischen der stempelseitigen und der matrizenseitigen Werkzeughälfte, um die Dichtheit der Kavität zu garantieren, welche für den vollständigen Umformprozeß von nöten ist. Durch die Erlangung einer entsprechend frühzeitigen Dichtheit der Kavität durch den Formschluß des beweglichen stempelseitigen Werkzeugteiles (5) mit der matrizenseitigen Werkzeughälfte (1) ist ein Tauchkantenwerkzeug nicht von nöten. Mit der Schließbewegung des Werkzeugteiles (5) kann, muß aber nicht zwingend, Umformenergie über etwaige produktbeaufschlagte Oberflächen in das Preßgut eingebracht werden. Die übrigen beweglichen Werkzeugteile (3) und (4) führen in dieser Phase des beschriebenen Ablaufes des differenzierten Preßprozesses keine Bewegungen aus und bringen somit keine Umformenergie in das Preßgut ein.

Die noch verbleibende Umformung des Preßgutes zum endgültigen Bauteil im differenzierten Preßprozeß erfolgt laut Abbildung 4 ausschließlich durch die Schließbewegung des beweglichen stempelseitigen Werkzeugteiles (4). Somit ist an der Einbringung der Umformenergie über den gesamten Umformprozeß gesehen nur ein Teil der nicht parallel zur Bewegungsrichtung liegenden Kavitätsoberfläche mindestens einer Werkzeughälfte beteiligt.

Die Aufbringung eines erforderlichen Nachdruckes (Schwindung) erfolgt über zusätzliche kleine Schließbewegungen aller beweglicher stempelseitiger Werkzeugteile, welche nicht über einen direkten Formschluß mit der matrizenseitigen Werkzeughälfte in Kontakt stehen.

Sowohl Größe und Form der einzelnen beweglichen stempelseitigen Werkzeugteile können aus werkzeugtechnischen Gründen und aus rheologischen Gegebenheiten individuell angepaßt werden. Die einzelnen Bewegungsabläufe der bewegten stempelseitigen Werkzeugteile können zusätzlich individuell gesteuert werden. Diese Gegebenheit eröffnet eine Vielfalt von Freiheitsgraden zur Findung des idealen Formgebungsprozesses in einem diskontinuierlichen differenzierten Preßprozeß. In diesem Sinne werden in der Praxis die hier beschriebenen Schließphasen von der streng sequenziellen Reihenfolge der Bewegungsabläufe in simultan ablaufende Schließbewegungen der einzelnen beweglichen Werkzeugteile erfolgen. Im Sinn der vorliegenden Erfindung entspricht es jedoch einer bevorzugten Ausführungsform des diskontinuierlichen differenzierten Preßprozesses, daß die letzten Phasen des Umformprozesses, also die vollständige Formfüllung, durch Einbringung von Umformenergie über jene Kavitätsoberflächen der beweglichen Werkzeugteile erfolgt, welche die geringsten Kavitätsoberflächen besitzen.

Das erfindungsgemäße Verfahren sowie die Vorrichtung eignen sich zum Verpressen aller preßfähigen Kunststoffe, insbesondere von solchen, die unter den Preßbedingungen plastisch bzw. fließfähig vorliegen. Bevorzugt werden duromere oder thermoplastische Kunststoffe, wie z. B. Harnstoff-, Melamin- oder Phenolharze, Epoxide, Polyolefine, wie z.B. Polyethylen, oder Polypropylen, Polyamide, Polyimide, Polyester, Polyetherketone, Polyesterketone, Polysulfide, Polysulfone, Aramide, eingesetzt. Die genannten Kunststoffe können sowohl ungefüllt als auch gefüllt bzw. unter Zusatz von üblichen Additiven verwendet werden. Das erfindungsgemäße Verfahren sowie die Vorrichtung eignet sich auch zum Verpressen von Metallen und keramischen Materialien.

Bauteile aus Kunststoffen, die nach dem erfindungsgemäßen Verfahren hergestellt werden, bzw. Bauteile, die in der erfindungsgemäßen Vorrichtung hergestellt werden sind beispielsweise:
Maschinenteile und Bauteile der Kraftfahrzeugindustrie:
   z.B. Autokarosserien, Türen, Motorhauben, Kotflügel, Heckklappen, Dächer, Seitenschweller, Stoßfängerträger, Motorkapseln, Reserveradmulden, Frontends, Batterieträger, Unterbodenverkleidungen, Armaturentafeln, Sitzschalen, Verkleidungsteile im Autoinnen- und Autoaußenbereich, Motorradverkleidungen, etc.
Maschinenteile und Bauteile der Luft- und Raumfahrt, Schifffahrt:
   Strukturbauteile, Sitzschalen, Gepäckfächer, Verkleidungen, Transportcontainer, etc.
   Bauteile der Elektro- und der Elektronikindustrie:
      Gehäuseteile, Abdeckungen, Haushaltsgeräte, Schaltschränke, Lampengehäuse, Gehäuse und Strukturbauteile der Computerindustrie, Trägerstrukturen für Elektronikbauteile, etc.
   Bauteile der Bauindustrie, der Möbelindustrie und der Hauhaltsindustrie:
      Duschkabinen, Schwimmbecken, Badewannen, Waschbecken, Chemiebehälter und Chemieequipment, Gullis, Container, Tabletts, Geschirr, Fassadenstrukturen, Gartenbänke, Dachkuppeln, Werkzeuggehäuse, Transportbehälter, Halbzeugherstellung, etc.

## Patentansprüche

1. Verfahren zum diskontinuierlichen Umformen von Kunststoffen durch Volumsverdrängung in einer Kavität, bei dem die Einbringung von Umformenergie in das umzuformende Material durch mindestens zwei bewegte Teile der Kavitätsoberfläche erfolgt, wobei mindestens eine Werkzeughälfte einen oder mehrere relativ zu ihr bewegte Teile enthält, zumindest ein Teil der Umformenergie durch Relativbewegung dieser Teile eingebracht wird und die Einbringung der Umformenergie über den gesamten Umformprozess gesehen, zeitlich und örtlich differenziert gesteuert erfolgt, **dadurch gekennzeichnet, dass** an der Einbringung der Umformenergie über den gesamten Umformprozeß gesehen nur ein Teil der gesamten nicht parallel zu Bewegungsrichtung liegenden Kavitätsoberfläche mindestens einer Werkzeughälfte beteiligt ist.

2. Verfahren gemäß Anspruch 1, **dadurch gekennzeichnet, dass** sich das gesamte umzuformende Material bereits zu Beginn des Umformprozesses in der Kavität befindet.

3. Verfahren gemäß Anspruch 1, **dadurch gekennzeichnet, dass** während des Umformprozesses umzuformendes Material von außen in die Kavität eingebracht wird.

4. Verfahren gemäß einem der Ansprüche 1 bis 3, **dadurch gekennzeichnet, dass** in der Kavität befindliches, umzuformendes Material zunächst durch die Bewegung einer Werkzeughälfte teilweise in ein Reservoir gefördert wird, das durch Zurückweichen eines bewegten Teils der Kavitätsoberfläche in eine negative Relativposition gebildet wird, und anschließend durch positive Relativbewegung dieses bewegten Teils der Kavitätsoberfläche aus dem Reservoir in andere Bereiche der Kavität gefördert wird.

5. Verfahren gemäß einem der Ansprüche 1 bis 4, **dadurch gekennzeichnet, dass** während des Umformprozesses große Fließwege des Materials auftreten.

6. Verfahren nach einem der Ansprüche 1, 2 oder 4, **dadurch gekennzeichnet, dass** die Umformung durch lokal plastisches Fließen erfolgt.

7. Vorrichtung zum diskontinuierlichen Pressen von Kunststoffen in einer Kavität bestehend aus zwei Werkzeughälften, **dadurch gekennzeichnet, dass** mindestens zwei Teile der Kavitätsoberfläche derart beweglich gestaltet sind, wobei mindestens eine Werkzeughälfte einen oder mehrere relativ zu ihr bewegte Teile enthält, dass durch die Relativbewegung dieser Teile zumindest ein Teil der Umformenergie in den Kunststoff eingebracht wird.

8. Vorrichtung zum Spritzprägen von Kunststoffen in einer Kavität bestehend aus zwei Werkzeughälften, **dadurch gekennzeichnet, dass** mindestens zwei Teile der Kavitätsoberfläche derart beweglich gestaltet sind, wobei mindestens eine Werkzeughälfte einen oder mehrere relativ zu ihr bewegte Teile enthält, dass durch die Relativbewegung dieser Teile zumindest ein Teil der Umformenergie in den Kunststoff eingebracht wird.

9. Vorrichtung gemäß Anspruch 7 oder 8, **dadurch gekennzeichnet, dass** die beweglichen Teile als Zusatzpressen ausgebildet sind.

10. Vorrichtung gemäß Anspruch 9, **dadurch gekennzeichnet, dass** die Zusatzpressen durch hydraulische Pressen gebildet werden.

11. Vorrichtung gemäß Anspruch 9, **dadurch gekennzeichnet, daß** die Zusatzpressen durch mechanische Pressen gebildet werden.

12. Vorrichtung gemäß Anspruch 9, **dadurch gekennzeichnet, daß** die Zusatzpressen durch Auswerfer oder Schieber gebildet werden.

## Claims

1. Process for the discontinuous forming of plastics by volume displacement in a cavity, in which process the introduction of forming energy into the material to be formed takes place through at least two moved parts of the cavity surface, at least one mould half containing one or more parts moved in relation to it, at least part of the forming energy being introduced through relative movement of these parts and the introduction of the forming energy taking place in a temporally and locationally differentiated controlled manner, seen over the entire forming process, **characterized in that** only part of the overall cavity surface of at least one mould half, not lying parallel to the direction of movement, is involved in the introduction of the forming energy, seen over the entire forming process.

2. Process according to Claim 1, **characterized in that** the entire material to be formed is already in the cavity at the beginning of the forming process.

3. Process according to Claim 1, **characterized in that** material to be formed is introduced into the cavity from outside during the forming process.

4. Process according to one of Claims 1 to 3, **characterized in that** material to be formed that is in the cavity is firstly conveyed by the movement of one mould half partly into a reservoir, which is formed by yielding of a moved part of the cavity surface into a negative relative position, and is subsequently conveyed out of the reservoir into other regions of the cavity by positive relative movement of this moved part of the cavity surface.

5. Process according to one of Claims 1 to 4, **characterized in that** great flow paths of the material occur during the forming process.

6. Process according to one of Claims 1, 2 or 4, **characterized in that** the forming takes place by local plastic flowing.

7. Device for the discontinuous press-moulding of plastics in a cavity comprising two mould halves, **characterized in that** at least two parts of the cavity surface are movably designed, with at least one mould half containing one or more parts moved in relation to it, in such a way that at least part of the forming energy is introduced into the plastic by the relative movement of these parts.

8. Device for the injection-stamping of plastics in a cavity comprising two mould halves, **characterized in that** at least two parts of the cavity surface are movably designed, with at least one mould half containing one or more parts moved in relation to it, in such a way that at least part of the forming energy is introduced into the plastic by the relative movement of these parts.

9. Device according to Claim 7 or 8, **characterized in that** the movable parts are designed as additional presses.

10. Device according to Claim 9, **characterized in that** the additional presses are formed by hydraulic presses.

11. Device according to Claim 9, **characterized in that** the additional presses are formed by mechanical presses.

12. Device according to Claim 9, **characterized in that** the additional presses are formed by ejectors or slides.

## Revendications

1. Procédé de déformation discontinue de matières synthétiques par déplacement de volume dans une cavité, dans lequel l'apport d'énergie de déformation dans le matériau à déformer s'effectue par au moins deux parties déplacées de la surface de la cavité, au moins une moitié de l'outil contenant une ou plusieurs parties déplacées par rapport à elle, au moins une partie de l'énergie de déformation étant apportée par déplacement relatif de ces parties et l'apport de l'énergie de déformation s'effectuant, vu sur l'ensemble du processus de déformation, de manière contrôlée différenciée en temps et en lieu, **caractérisé en ce que** seulement une partie de l'ensemble de la surface de la cavité d'au moins une moitié d'outil, non parallèle au sens de déplacement, participe à l'apport de l'énergie de déformation, vu sur l'ensemble du processus de déformation.

2. Procédé selon la revendication 1, **caractérisé en ce que** l'ensemble du matériau à déformer se trouve déjà dans la cavité au commencement du processus de déformation.

3. Procédé selon la revendication 1, **caractérisé en ce que** pendant le processus de déformation, on introduit du matériau à déformer depuis l'extérieur dans la cavité.

4. Procédé selon l'une quelconque des revendications 1 à 3, **caractérisé en ce que** le matériau à déformer se trouvant dans la cavité est tout d'abord acheminé par le mouvement d'une moitié d'outil partiellement dans un réservoir, qui est formé en faisant reculer une partie déplacée de la surface de la cavité dans une position relative négative, puis est acheminé hors du réservoir dans d'autres régions de la cavité par un mouvement relatif positif de cette partie déplacée de la surface de la cavité.

5. Procédé selon l'une quelconque des revendications 1 à 4, **caractérisé en ce que**, pendant le processus de déformation, il se forme de grandes voies d'écoulement du matériau.

6. Procédé selon l'une quelconque des revendications 1, 2 ou 4, **caractérisé en ce que** la déformation s'effectue par écoulement plastique local.

7. Dispositif de pressage discontinu de matières synthétiques dans une cavité se composant de deux moitiés d'outil, **caractérisé en ce qu'**au moins deux parties de la surface de la cavité sont configurées de manière déplaçable, au moins une moitié d'outil contenant une ou plusieurs parties déplacées par rapport à elle, de telle sorte qu'au moins une partie de l'énergie de déformation soit apportée dans la matière synthétique par le déplacement relatif de ces parties.

8. Dispositif de moulage par injection-compression de matières synthétiques dans une cavité se composant de deux moitiés d'outil, **caractérisé en ce qu'**au moins deux parties de la surface de la cavité sont configurées de manière déplaçable, au moins une moitié d'outil contenant une ou plusieurs parties déplacées par rapport à elle, de telle sorte qu'au moins une partie de l'énergie de déformation soit apportée dans la matière synthétique par le déplacement relatif de ces parties.

9. Dispositif selon la revendication 7 ou 8, **caractérisé en ce que** les parties déplacées sont réalisées sous la forme de presses supplémentaires.

10. Dispositif selon la revendication 9, **caractérisé en ce que** les presses supplémentaires sont formées par des presses hydrauliques.

11. Dispositif selon la revendication 9, **caractérisé en ce que** les presses supplémentaires sont formées par des presses mécaniques.

12. Dispositif selon la revendication 9, **caractérisé en ce que** les presses supplémentaires sont formées par des éjecteurs ou des coulisses.
